# FASCICULE DE BREVET EUROPEEN

(11) **EP 3 649 188 B1**
(45) Date de publication et mention de la délivrance du brevet: **04.08.2021**
(21) Numéro de dépôt: 18752555.5
(22) Date de dépôt: 05.07.2018
(51) Int. Cl.: B01J 20/28, B01J 20/286, B01J 20/32, G01N 30/60, C08J 7/18, G01N 30/02, G01N 30/56

(54) **PROCÉDÉ DE PRÉPARATION D'UNE PHASE STATIONNAIRE MONOLITHIQUE, PROCÉDÉS DE FABRICATION D'UNE COLONNE CHROMATOGRAPHIQUE ET DE SÉPARATION ASSOCIÉS**
VERFAHREN ZUR HERSTELLUNG EINER MONOLITHISCHEN STATIONÄREN PHASE, ZUGEHÖRIGES VERFAHREN ZUR HERSTELLUNG EINER CHROMATOGRAPHIESÄULE UND ZUGEHÖRIGES TRENNVERFAHREN
METHOD FOR PREPARING A MONOLITHIC STATIONARY PHASE, ASSOCIATED METHOD FOR PRODUCING A CHROMATOGRAPHY COLUMN AND ASSOCIATED SEPARATION METHOD

(30) Priorité: 06.07.2017 FR 1756393
(43) Date de publication de la demande: 13.05.2020
(73) Titulaire: Commissariat à l'Énergie Atomique et aux Énergies Alternatives, 75015 Paris (FR)
(72) Inventeur: LOSNO, Marion, 75011 Paris (FR); MARIET, Clarisse, 92120 Montrouge (FR)
(74) Mandataire: Brevalex
(86) Numéro de dépôt international: PCT/FR2018/051676
(87) Numéro de publication internationale: WO 2019/008278

(56) Documents cités:
- FR-A1- 2 978 153
- US-A1- 2004 101 442
- US-A1- 2007 015 179
- RO K W ET AL: "Plastic microchip liquid chromatography-matrix-assisted laser desorption/ionization mass spectrometry using monolithic columns", JOURNAL OF CHROMATOGRAPHY A, ELSEVIER, AMSTERDAM, NL, vol. 1111, no. 1, 7 avril 2006 (2006-04-07), pages 40-47, XP024968003, ISSN: 0021-9673, DOI: 10.1016/J.CHROMA.2006.01.105 [extrait le 2006-04-07]
- STACHOWIAK T B ET AL: "Fabrication of porous polymer monoliths covalently attached to the wall of channels in plastic microdevices", ELECTROPHORESIS : LIQUID PHASE SEPARATION TECHNIQUES : MICROFLUIDICS, NANOANALYSIS, PROTEOMICS, WILEY INTERSCIENCE, DE, vol. 22, 31 janvier 2003 (2003-01-31), pages 3689-3693, XP009100062, ISSN: 0173-0835, DOI: 10.1002/ELPS.200305536
- YOANN LADNER ET AL: "New "one-step" method for the simultaneous synthesis and anchoring of organic monolith inside COC microchip channels", LAB ON A CHIP, vol. 12, no. 9, 13 février 2012 (2012-02-13), pages 1680-1685, XP055061295, ISSN: 1473-0197, DOI: 10.1039/c2lc21211k cité dans la demande

## Description

### DOMAINE TECHNIQUE

La présente invention se rapporte à un procédé de préparation d'une phase stationnaire monolithique destinée, entre autres, à équiper une colonne de chromatographie en polymère thermoplastique, en particulier en copolymère d'oléfine cyclique.

La présente invention se rapporte, par ailleurs, à un procédé de fabrication d'une colonne de chromatographie comprenant une telle phase stationnaire monolithique.

L'invention se rapporte enfin à un procédé de séparation chromatographique d'éléments contenus dans une solution aqueuse acide, ce procédé mettant en œuvre une colonne de chromatographie fabriquée par le procédé précédent.

### ÉTAT DE LA TECHNIQUE ANTÉRIEURE

Depuis quelques années, on assiste au développement de dispositifs micro-fluidiques tels que des systèmes analytiques miniaturisés, également appelés microsystèmes d'analyse totale et abrégés MicroTAS (acronyme de l'anglais Micro Total Analysis Systems).

Cette miniaturisation des systèmes analytiques répond tout d'abord à la volonté de développer des systèmes portatifs qui intègrent les étapes d'extraction, de séparation et de détection et rendent envisageables des analyses de terrain. Elle répond également aux besoins des laboratoires en termes de réduction des coûts et des volumes de réactifs ainsi que d'échantillons à traiter. De tels systèmes analytiques miniaturisés peuvent, en outre, être parallélisés, et ainsi permettre de gérer un flux important d'échantillons tout en réduisant les temps d'analyse et de manipulation.

La rétention d'un élément est inversement proportionnelle au carré du diamètre des colonnes de séparation. De ce fait, même si les volumes d'échantillons à analyser diminuent, une sensibilité élevée peut tout de même être atteinte avec les systèmes miniaturisés.

Dans le cadre de la présente invention, on s'intéresse plus particulièrement aux systèmes miniaturisés de chromatographie qui mettent en œuvre des phases stationnaires formées par des monolithes organiques, appelées "phases stationnaires monolithiques" dans la suite de la présente description.

Ces phases stationnaires monolithiques sont classiquement formées par une structure tridimensionnelle, continue et poreuse, qui est composée de nodules interconnectés et qui est fonctionnalisée en fonction de la nature de la séparation ou de l'extraction à réaliser.

La facilité de préparation de ces phases stationnaires monolithiques à partir de précurseurs présents dans des compositions polymérisables sous forme liquide dans des colonnes ou canaux miniaturisés a favorisé le développement de ce type de phases stationnaires.

Ces compositions polymérisables permettent, après polymérisation, de former la phase stationnaire monolithique de ces colonnes ou canaux. Elles sont désignées, dans la suite de la présente description, par l'expression de "composition(s) polymérisable(s) de synthèse du monolithe".

Plus particulièrement, le procédé de préparation de telles phases stationnaires monolithiques dans le volume intérieur d'une colonne de chromatographie comprend les étapes suivantes :
(1) la préparation d'une composition polymérisable de synthèse du monolithe,
(2) l'introduction de la composition polymérisable de synthèse du monolithe ainsi préparée dans le volume intérieur de la colonne, et
(3) la polymérisation radicalaire *in situ* de la composition polymérisable de synthèse du monolithe.

La composition polymérisable de synthèse du monolithe comprend un ou plusieurs monomères organiques, un ou plusieurs agents porogènes et un amorceur de polymérisation radicalaire.

Après introduction de la composition polymérisable de synthèse du monolithe dans le volume intérieur de la colonne, on procède à la polymérisation *in situ* de cette composition de synthèse du monolithe, par voie thermique ou photochimique, par exemple par l'application de rayons ultraviolets, pour l'obtention de la phase stationnaire monolithique. Il est à noter que la voie photochimique présente l'avantage d'être nettement plus rapide que la voie thermique et d'être, en outre, localisable.

Ainsi, le procédé de préparation permet de former la phase stationnaire monolithique directement à l'intérieur de la colonne, du capillaire ou encore du microcanal.

Se pose toutefois le problème de l'ancrage de cette phase stationnaire monolithique à l'intérieur de la colonne. Or, un tel ancrage à la paroi interne de la colonne est essentiel, non seulement pour éviter l'entraînement, et donc le déplacement à l'intérieur de la colonne, de la phase stationnaire monolithique lors des circulations de phase mobile, mais également pour assurer les performances chromatographiques des systèmes miniaturisés de chromatographie qui sont équipés de telles phases stationnaires monolithiques.

Cet ancrage de la phase stationnaire à la paroi interne de la colonne est directement lié au matériau constitutif de la colonne.

Les principaux matériaux constitutifs des colonnes peuvent être inorganiques, en particulier des verres, par exemple de la silice fondue, du quartz ou du verre de borosilicaté.

Les colonnes peuvent également être formées par des matériaux à base de polymères. Parmi les polymères couramment utilisés, on peut citer le polydiméthylsiloxane (PDMS), qui est un polymère organominéral de la famille des siloxanes, ainsi que de nombreux polymères thermoplastiques parmi lesquels les poly(méthacrylate de méthyle) (PMMA), le polyéthylène (PE), le polypropylène (PP) ou encore les copolymères d'oléfine cyclique (COC).

Lorsque le matériau de la colonne, capillaire ou microcanal, est en verre ou en PDMS, il est nécessaire de procéder à une étape de fonctionnalisation de la paroi interne de cette colonne, ce capillaire ou microcanal, de manière à permettre l'ancrage ultérieur de la phase stationnaire monolithique. Cette étape de fonctionnalisation consiste classiquement à conduire une réaction de silanisation permettant de modifier les ponts siloxane de la paroi interne en groupements silanol.

Toutefois, une telle étape de fonctionnalisation n'a aucun effet pour des colonnes réalisées en polymère thermoplastique telles que celles en COC.

Pour permettre la formation de la phase stationnaire monolithique à l'intérieur d'une colonne en COC et son ancrage à la paroi interne de cette colonne, la publication d'Y. Ladner et al. ("New "one-step" method for the simultaneous synthesis and anchoring of organic monolith inside COC microchip channels", Lab Chip, 2012, 12, 1680-1685), référencée [1] dans la suite de la présente description, propose un procédé de préparation du type précité, avec la mise en œuvre de compositions polymérisables particulières qui permettent la synthèse et le greffage, par liaison covalente, de la phase stationnaire monolithique à la paroi interne d'une colonne en COC.

Les compositions polymérisables particulières décrites dans la publication **[1]** comprennent au moins un monomère acrylate ou méthacrylate, ci-après désigné par l'expression "monomère (méth)acrylate", plusieurs agents porogènes et un amorceur de polymérisation radicalaire choisi parmi le méthyl éther de benzoïne (BME) et l'azobisisobutyronitrile (AIBN).

Plus précisément, le ou les monomères (méth)acrylates présents dans les différentes compositions polymérisables décrites dans la publication [1] sont :
- l'acrylate d'hexyle (HA) et le diacrylate de 1,3-butanediol (BDDA),
- le méthacrylate de glycidyle (GMA) et le diméthacrylate d'éthylène glycol (EGDMA), ou
- le méthacrylate de polyéthylène glycol (PEGMA).

On retrouve dans le document FR 2 978 153, référencé **[2],** certains des exemples de compositions polymérisables décrites dans la publication **[1].** Il y a toutefois lieu de noter que le document **[2]** élargit la liste des amorceurs de polymérisation radicalaire susceptibles d'être utilisés pour la préparation des phases stationnaires destinées aux systèmes analytiques miniaturisés. Ainsi, en plus du BME et de l'AIBN, le document **[2]** décrit l'utilisation de dérivés d'éthers de benzoïne, de dérivés de benzylcétal, d'alkylphénones ou encore de thioxanthones.

Le document **[2]** indique toutefois que les monomère(s), agent(s) porogène(s) et amorceur de polymérisation radicalaire formant la composition polymérisable, ainsi que leurs proportions respectives, doivent être adaptés par l'Homme du métier pour permettre que soient simultanément obtenus la synthèse de la phase stationnaire et l'ancrage de cette phase stationnaire à la paroi interne de la colonne.

Plus particulièrement, pour améliorer la tenue en pression et, ce faisant, l'ancrage de la phase stationnaire à la paroi interne de la colonne ainsi que les performances chromatographiques, le document **[2]** précise que les proportions massiques d'amorceur de polymérisation radicalaire sont dépendantes de l'amorceur choisi et doivent être adaptées en fonction de cet amorceur et de la phase stationnaire monolithique choisie.

En conséquence, le bénéfice que l'on pourrait attendre d'un procédé tel que celui décrit dans la publication **[1]** et le document **[2]** qui propose de réaliser, en une seule étape, la synthèse et l'ancrage d'une phase stationnaire monolithique à l'intérieur d'une colonne en COC, est annulé par la multiplication des essais préparatoires qu'il est nécessaire de conduire pour sélectionner les monomère(s), agent(s) porogène(s) et amorceur de polymérisation radicalaire formant la composition polymérisable et les proportions respectives de chacun de ces composés pour former une phase stationnaire monolithique donnée.

De surcroît, si les séparations chromatographiques d'hydrocarbures aromatiques polycycliques, en particulier d'anthracène, rapportées dans la publication **[1]** et le document **[2]** se sont révélées satisfaisantes, on observe que les colonnes équipées des phases stationnaires monolithiques qui sont décrites dans ces documents ne permettent pas de séparer certains éléments, en particulier lorsque ces éléments sont présents dans une phase liquide constituée par une solution aqueuse comprenant de l'acide nitrique à de fortes concentrations. On observe, en effet, que la circulation d'une phase liquide formée par une telle solution aqueuse acide provoque la dégradation, voire la rupture, de l'ancrage de la phase stationnaire monolithique à la paroi interne de la colonne en COC, rendant cette colonne alors inutilisable pour la séparation chromatographique en cours et, bien entendu, pour des séparations chromatographiques ultérieures.

Le but de la présente invention est, par conséquent, de pallier les inconvénients de l'art antérieur et de proposer un procédé de préparation d'une phase stationnaire monolithique qui puisse être formée directement à l'intérieur d'une colonne en polymère thermoplastique et de telle manière que l'ancrage de cette phase stationnaire monolithique à la paroi interne de cette colonne soit performant pour résister à la fois aux pressions qui s'exercent dans cette colonne, en particulier dans le cas où cette colonne est destinée à équiper des systèmes analytiques miniaturisés et à la circulation d'une phase liquide constituée par une solution aqueuse concentrée d'acide(s).

Un autre but de l'invention consiste à proposer un procédé de fabrication d'une colonne de chromatographie en polymère thermoplastique et comprenant une phase stationnaire monolithique, qui puisse être mise en œuvre pour extraire et/ou séparer, de manière répétable, des éléments contenus dans des solutions concentrées d'acides, telles que des solutions comprenant de l'acide nitrique ou de l'acide chlorhydrique à de fortes concentrations.

De manière plus générale, un autre but de l'invention consiste à proposer un procédé de modification de la surface d'un support formé en un polymère thermoplastique, notamment en COC, permettant de fonctionnaliser cette surface en vue d'un ancrage ultérieur, par exemple d'un ancrage par greffage, par liaison covalente, d'une structure monolithique, le support ainsi modifié présentant une résistance chimique améliorée lui permettant d'être mis en œuvre pour des extractions et/ou séparations d'éléments contenus dans les solutions concentrées d'acides mentionnées ci-dessus.

### EXPOSÉ DE L'INVENTION

Les buts précédemment énoncés ainsi que d'autres sont atteints, en premier lieu, par un procédé de modification d'une surface d'un support formé en un polymère thermoplastique, ce procédé comprenant les étapes successives suivantes :
(a) la préparation d'une composition polymérisable d'ancrage comprenant :
   - au moins un monomère (méth)acrylate,
   - un ou plusieurs solvants, et
   - un amorceur de polymérisation radicalaire,
(b) le dépôt, sur la surface du support, de la composition polymérisable d'ancrage préparée à l'étape (a), et
(c) la polymérisation de la composition polymérisable d'ancrage par irradiation au moyen de rayons ultraviolets.

Selon l'invention, le monomère (méth)acrylate est choisi parmi le diméthacrylate d'éthylène glycol (EGDMA), le diacrylate de 1,4-butanediol (BDA), le diméthacrylate de triéthylène glycol (TEGDMA) et le triméthacrylate de triméthylolpropane (TMPTMA), et l'amorceur de polymérisation radicalaire est la 2,2-diméthoxy-2-phénylacétophénone (DMPA ou DMPAP).

La composition polymérisable d'ancrage est formée par la sélection de ce ou ces monomères (méth)acrylates particuliers, en combinaison avec le ou les solvants et la DMPA en tant qu'amorceur de polymérisation radicalaire. Cette composition polymérisable d'ancrage permet ainsi de fonctionnaliser, de manière aisée, un support en polymère thermoplastique en vue d'un greffage ultérieur, par exemple d'une structure poreuse tridimensionnelle monolithique. L'ensemble constitué par le support et la couche, qui est obtenue par polymérisation de la composition polymérisable d'ancrage et qui est greffée par liaison covalente audit support, présente une résistance chimique particulièrement performante, en particulier lorsque cet ensemble est mis en contact avec une solution concentrée d'acide(s).

Ce constat est d'autant plus inattendu et surprenant lorsque l'on se réfère à l'enseignement de la publication de J.M. Burke et al. ("A novel surface modification technique for forming porous polymer monoliths in poly(dimethylsiloxane)", Biomicrofluidics, 2012, 6, 016506), référencée **[3].**

Les auteurs de cette publication **[3]** proposent, en effet, un procédé de modification de la surface d'un support qui n'est pas en polymère thermoplastique mais en PDMS. Ce procédé comprend :
- une première étape consistant à imprégner ce support avec de la DMPA,
- une deuxième étape consistant à imprégner ce support imprégné de DMPA avec une solution comprenant des monomères (méth)acrylates, et
- une troisième étape consistant à irradier, au moyen de rayons ultraviolets à 365 nm, ce support successivement imprégné de DMPA et de la solution de monomères (méth)acrylates.

Lors de la troisième étape, on réalise la polymérisation des monomères (méth)acrylates au sein du support en PDMS. Ce faisant, la surface du support en PDMS est modifiée et pourvue de groupements fonctionnels qui permettent d'envisager un ancrage ultérieur d'une structure monolithique, par exemple par mise en contact de cette surface du support modifiée avec une composition polymérisable destinée à former cette structure monolithique, puis polymérisation de cette composition.

Si l'amorceur de polymérisation radicalaire utilisé dans le procédé décrit dans cette publication **[3]** est effectivement la DMPA, ce procédé requiert que cet amorceur soit imprégné dans le support. Or, si l'imprégnation d'un support formé par le polymère organominéral qu'est le PDMS est faisable, celle d'un support formé par un polymère thermoplastique du type PMMA, PE, PP ou COC, est impossible.

L'étape (a) de préparation de la composition polymérisable d'ancrage mise en œuvre dans le procédé de modification selon l'invention peut être réalisée par simple mélange du ou des monomères (méth)acrylates, du ou des solvants et de la DMPA.

Comme indiqué précédemment, la composition polymérisable d'ancrage comprend au moins un monomère (méth)acrylate, ce monomère (méth)acrylate étant choisi parmi le diméthacrylate d'éthylène glycol (EGDMA), le diacrylate de 1,4-butanediol (BDA), le diméthacrylate de triéthylène glycol (TEGDMA) et le triméthacrylate de triméthylolpropane (TMPTMA). Cette composition polymérisable d'ancrage peut donc ne comprendre qu'un seul monomère (méth)acrylate parmi les monomères (méth)acrylates qui viennent d'être cités. À l'inverse, la composition polymérisable d'ancrage peut comprendre deux ou trois de ces monomères (méth)acrylates, voire les quatre monomères (méth)acrylates.

Dans une variante avantageuse de ce procédé, le monomère (méth)acrylate est le diméthacrylate d'éthylène glycol (EGDMA).

La composition polymérisable d'ancrage mise en œuvre dans le procédé selon l'invention comprend, par ailleurs, un ou plusieurs solvants.

Ce ou ces solvants permettent notamment de solubiliser l'ensemble des composés formant la composition polymérisable d'ancrage, à savoir le ou les monomères (méth)acrylates mentionnés ci-dessus et la DMPA.

Si, dans une variante avantageuse, cette composition polymérisable d'ancrage ne comprend qu'un seul solvant, rien n'interdit d'envisager un mélange de deux, trois, voire plus, solvants.

Les solvants susceptibles d'être utilisés pour la préparation de la composition polymérisable d'ancrage peuvent notamment être choisis parmi le méthanol, l'éthanol, le 1-propanol, le 1,4-butanediol, le cyclohexanol, le 1-décanol, l'acétonitrile, le toluène et l'iso-octane.

Le solvant est avantageusement l'éthanol.

Dans une variante du procédé de modification selon l'invention, la proportion massique du ou des solvants, par rapport à la masse totale de la composition polymérisable d'ancrage, est comprise entre 50 % en masse et 90 % en masse.

De manière plus particulièrement avantageuse, la proportion massique du ou des solvants, par rapport à la masse totale de la composition polymérisable d'ancrage, est comprise entre 60 % en masse et 80 % en masse.

Il est précisé que l'expression "compris(e) entre ... et ..." qui vient d'être citée et qui est utilisée dans la présente demande doit être comprise comme définissant non seulement les valeurs de l'intervalle, mais également les valeurs des bornes de cet intervalle.

La composition polymérisable d'ancrage mise en œuvre dans le procédé de modification selon l'invention comprend également la 2,2-diméthoxy-2-phénylacétophénone (DMPA) comme un amorceur de polymérisation radicalaire.

Dans une variante du procédé de modification selon l'invention, la proportion massique de DMPA, par rapport à la masse totale de la composition polymérisable d'ancrage, est comprise entre 5 % en masse et 15 % en masse.

Dans une variante plus particulièrement avantageuse, la proportion massique de DMPA, par rapport à la masse totale de la composition polymérisable d'ancrage, est comprise entre 6 % en masse et 10 % en masse.

L'étape (b) de dépôt, sur la surface du support, de la composition polymérisable d'ancrage mise en œuvre dans le procédé de modification selon l'invention peut être réalisée par toute technique permettant la mise en contact de cette composition polymérisable d'ancrage avec la surface du support.

Cette technique est bien évidemment adaptée à la conformation du support et de la surface considérée de ce support.

Par exemple, lorsque le support est formé par une structure ouverte, telle qu'une plaque ou un film, la surface du support peut être recouverte d'une très fine couche de la composition polymérisable d'ancrage déposée au moyen d'un pinceau.

Lorsque le support est formé par une structure fermée, telle qu'un microcanal ou un capillaire, la composition polymérisable d'ancrage est, dans un premier temps, introduite dans ce microcanal ou ce capillaire de manière à remplir, au moins en partie, le volume intérieur de cette structure fermée. On peut notamment envisager une circulation de la composition polymérisable d'ancrage dans le volume intérieur du microcanal ou du capillaire. Dans un deuxième temps, l'excès de composition polymérisable d'ancrage est évacué de manière à ne laisser qu'une fine couche de composition polymérisable d'ancrage sur la paroi interne du microcanal ou du capillaire, cette paroi interne correspondant à la surface du support.

L'étape (c) de polymérisation de la composition polymérisable d'ancrage mise en œuvre dans le procédé de modification selon l'invention est une polymérisation par voie radicalaire en chaîne, qui est initiée par la DMPA.

Cette polymérisation est une photo-polymérisation, c'est-à-dire une polymérisation qui est réalisée par irradiation au moyen de rayons ultraviolets (UV) de la composition polymérisable d'ancrage préparée à l'étape (a) puis déposée, lors de l'étape (b), sur la surface du support.

Le polymère thermoplastique formant le support est, de préférence, transparent à la longueur d'onde des rayons UV appliqués lors de cette étape (c) de polymérisation. Par "transparence", on entend que le polymère thermoplastique présente une absorbance, notée A, telle que A ≤ 0,3 à la longueur d'onde des rayons UV appliqués lors de l'étape (c).

Dans une variante du procédé de modification selon l'invention, la longueur d'onde des rayons UV appliqués lors de l'étape (c) est comprise entre 320 nm et 400 nm.

Cette longueur d'onde des rayons UV est avantageusement comprise entre 350 nm et 380 nm et, préférentiellement, comprise entre 355 nm et 370 nm.

Dans une variante du procédé de modification selon l'invention, le temps d'irradiation au moyen des rayons UV est compris entre 5 min et 80 min et, avantageusement, entre 15 min et 70 min.

Ces temps d'irradiation sont à adapter en fonction de la conformation du support.

Ainsi, lorsque le support est formé par une structure ouverte telle qu'une plaque ou un film, le temps d'irradiation au moyen des rayons UV peut être compris entre 5 min et 30 min et, avantageusement, entre 15 min et 25 min.

Lorsque le support est formé par une structure fermée telle qu'un microcanal ou un capillaire, le temps d'irradiation au moyen des rayons UV peut être compris entre 40 min et 80 min et, avantageusement, entre 50 min et 70 min.

Dans une variante avantageuse du procédé de modification selon l'invention, le polymère thermoplastique du support est choisi parmi un polyméthacrylate de méthyle (PMMA), un polyéthylène (PE), un polypropylène (PP) et un copolymère d'oléfine cyclique (COC).

Dans une variante préférentielle, le polymère thermoplastique du support est un copolymère d'oléfine cyclique (COC).

La présente invention se rapporte, en deuxième lieu, à un procédé de préparation d'une phase stationnaire monolithique dans le volume intérieur d'une colonne de chromatographie, et notamment dans le volume intérieur d'une colonne de chromatographie de séparation ou d'extraction.

Selon l'invention, ce procédé de préparation comprend les étapes successives suivantes :
(i) la modification de la surface du support par la mise en œuvre du procédé de modification tel que défini ci-dessus, la surface du support étant formée par la paroi interne de la colonne de chromatographie ;
(ii) l'introduction d'une composition polymérisable de synthèse du monolithe dans le volume intérieur de la colonne de chromatographie, la composition polymérisable de synthèse du monolithe comprenant :
   - un premier monomère (méth)acrylate choisi parmi le diméthacrylate d'éthylène glycol, le diacrylate de 1,4-butanediol, le diméthacrylate de triéthylène glycol et le triméthacrylate de triméthylolpropane,
   - un deuxième monomère méth(acrylate) choisi parmi le méthacrylate d'allyle, le méthacrylate de glycidyle, le méthacrylate de lauryle, le méthacrylate de butyle, le méthacrylate de 2-hydroxyéthyle, le di(méth)acrylate de polyéthylène glycol, le méthacrylate de glycidyle et de bisphénol A et l'acrylate d'hexyle,
   - un ou plusieurs agents porogènes, et
   - un amorceur de polymérisation radicalaire ; et
(iii) la polymérisation de la composition polymérisable de synthèse du monolithe.

En d'autres termes, le procédé de préparation d'une phase stationnaire monolithique dans le volume intérieur d'une colonne de chromatographie comprend les étapes successives suivantes :
(i) la modification de la paroi interne de la colonne de chromatographie par la mise en œuvre des étapes (a) à (c) successives suivantes :
   (a) la préparation d'une composition polymérisable d'ancrage comprenant :
      - au moins un monomère choisi parmi le diméthacrylate d'éthylène glycol, le diacrylate de 1,4-butanediol, le diméthacrylate de triéthylène glycol et le triméthacrylate de triméthylolpropane,
      - un ou plusieurs solvants, et
      - la 2,2-diméthoxy-2-phénylacétophénone (DMPA),
   (b) le dépôt, sur la paroi interne de la colonne de chromatographie, de la composition polymérisable d'ancrage préparée à l'étape (a), et
   (c) la polymérisation de la composition polymérisable d'ancrage par irradiation au moyen de rayons ultraviolets ;
(ii) l'introduction d'une composition polymérisable de synthèse du monolithe dans le volume intérieur de la colonne de chromatographie, la composition polymérisable de synthèse du monolithe comprenant :
   - un premier monomère (méth)acrylate choisi parmi le diméthacrylate d'éthylène glycol, le diacrylate de 1,4-butanediol, le diméthacrylate de triéthylène glycol et le triméthacrylate de triméthylolpropane,
   - un deuxième monomère méth(acrylate) choisi parmi le méthacrylate d'allyle, le méthacrylate de glycidyle, le méthacrylate de lauryle, le méthacrylate de butyle, le méthacrylate de 2-hydroxyéthyle, le di(méth)acrylate de polyéthylène glycol, le méthacrylate de glycidyle et de bisphénol A et l'acrylate d'hexyle,
   - un ou plusieurs agents porogènes, et
   - un amorceur de polymérisation radicalaire ; et
(iii) la polymérisation de la composition polymérisable de synthèse du monolithe.

Le procédé selon l'invention permet de préparer, dans le volume intérieur d'une colonne de chromatographie en polymère thermoplastique, une phase stationnaire monolithique qui est solidement ancrée, par greffage covalent, à la paroi interne de cette colonne telle que modifiée à l'issue de l'étape (i).

Cet ancrage de la phase stationnaire monolithique présente, en particulier, une résistance chimique performante lui permettant de ne pas être dégradé, en particulier lorsque la phase stationnaire monolithique est mise en contact avec une solution concentrée d'acide(s).

L'ancrage de la phase stationnaire monolithique à la paroi interne modifiée de la colonne chromatographique est renforcé par la mise en œuvre de monomères de la même famille chimique, en l'espèce des monomères (méth)acrylates.

Dans ce procédé de préparation d'une phase stationnaire monolithique selon l'invention, les étapes (a) à (c), qui forment l'étape (i), sont réalisées par le procédé de modification tel que défini ci-avant, étant précisé que les caractéristiques avantageuses de ce procédé de modification, telles que celles relatives aux monomère(s), solvant(s) et DMPA, à leurs proportions massiques respectives et/ou aux étapes (a) et (c) proprement dite, peuvent être prises seules ou en combinaison.

Comme indiqué précédemment, l'étape (b) de dépôt de la composition polymérisable d'ancrage préparée à l'étape (a) sur la paroi interne de la colonne peut notamment être réalisée par au moins un remplissage par cette composition polymérisable d'ancrage du volume intérieur de la colonne de chromatographie puis évacuation de cette composition polymérisable d'ancrage de façon à ne conserver qu'un film sur les parois.

Il est ensuite procédé à l'étape (c) de photo-polymérisation de la composition polymérisable d'ancrage à l'intérieur de cette colonne (*in situ*)*.*

À l'issue de l'étape (c) ou (i), on obtient une colonne de chromatographie dont la paroi interne est modifiée et fonctionnalisée.

Le procédé de préparation selon l'invention comprend, après cette étape (i), une étape (ii) consistant à introduire une composition polymérisable de synthèse du monolithe dans le volume intérieur de la colonne.

La composition polymérisable de synthèse du monolithe comprend un premier et un deuxième monomères (méth)acrylates, un ou plusieurs agents porogènes et un amorceur de polymérisation radicalaire.

Le premier monomère (méth)acrylate est choisi parmi les monomères (méth)acrylates déjà décrits précédemment, en relation avec la composition polymérisable d'ancrage préparée lors de l'étape (a) du procédé de modification selon l'invention. Ainsi, ce premier monomère (méth)acrylate est choisi parmi le diméthacrylate d'éthylène glycol (EGDMA), le diacrylate de 1,4-butanediol (BDA), le diméthacrylate de triéthylène glycol (TEGDMA) et le triméthacrylate de triméthylolpropane (TMPTMA).

Dans une variante avantageuse de ce procédé, le premier monomère (méth)acrylate est le diméthacrylate d'éthylène glycol (EGDMA).

Le deuxième monomère (méth)acrylate est, quant à lui, choisi parmi le méthacrylate d'allyle (AMA), le méthacrylate de glycidyle (GMA), le méthacrylate de lauryle (LMA), le méthacrylate de butyle (BMA), le méthacrylate de 2-hydroxyéthyle (HEMA), le diacrylate de polyéthylène glycol (PEGDA), le diméthacrylate polyéthylène glycol (PEGDMA), le méthacrylate de glycidyle et de bisphénol A (bis-GMA) et l'acrylate d'hexyle (HA).

Le méthacrylate de glycidyle et de bisphénol A (bis-GMA) correspond au 2,2-bis[4-(2-hydroxy-3-méthacryloxyprop-1-oxy)phényl]-propane (nomenclature IUPAC).

Dans une variante avantageuse de ce procédé de préparation, le deuxième monomère (méth)acrylate est le méthacrylate d'allyle (AMA).

De manière avantageuse, les composition polymérisable d'ancrage et composition polymérisable de synthèse du monolithe, respectivement mises en œuvre lors des étapes (i) et (ii), comprennent un même monomère (méth)acrylate choisi parmi le diméthacrylate d'éthylène glycol (EGDMA), le diacrylate de 1,4-butanediol (BDA), le diméthacrylate de triéthylène glycol (TEGDMA) et le triméthacrylate de triméthylolpropane (TMPTMA).

Le fait de mettre en œuvre un même monomère (méth)acrylate dans les compositions polymérisables d'ancrage et de synthèse du monolithe permet de conserver une homogénéité de la structure polymérique de la paroi interne jusqu'au centre de la colonne chromatographique. Ce faisant, la solidité de l'ancrage de la phase stationnaire dans la colonne chromatographique ainsi que les propriétés de rétention de cette phase stationnaire sont simultanément optimisées.

Dans une variante avantageuse de ce procédé, le monomère (méth)acrylate des composition polymérisable d'ancrage et composition polymérisable de synthèse du monolithe est le diméthacrylate d'éthylène glycol (EGDMA).

Le ou les agents porogènes de la composition polymérisable de synthèse du monolithe peuvent être choisis parmi le méthanol, le 1-propanol, le 2-propanol, le cyclohexanol, le dodécanol, le 1,4-butanediol, l'isooctane, le toluène, l'hexane, le tétrahydrofurane ou encore l'acétonitrile.

Dans une variante avantageuse du procédé de préparation selon l'invention, la composition polymérisable de synthèse du monolithe comprend deux agents porogènes, éventuellement en mélange avec de l'eau.

Dans une variante préférentielle, les deux agents porogènes de la composition polymérisable de synthèse du monolithe sont un monoalcool et un diol.

Le monoalcool peut notamment être choisi parmi le méthanol, le 1-propanol, le 2-propanol, le cyclohexanol et le dodécanol.

De préférence, ce monoalcool est le 1-propanol.

Le diol peut notamment être choisi parmi le 1,3-propanediol, le 1,4-butanediol, le 1,5-pentanediol et le 1,6-hexanediol.

De préférence, ce diol est le 1,4-butanediol.

Plus préférentiellement encore, les agents porogènes sont formés par un mélange d'eau, de 1-propanol et de 1,4-butanediol.

L'amorceur de polymérisation radicalaire de la composition polymérisable de synthèse du monolithe peut être choisi parmi les amorceurs de polymérisation radicalaire classiquement utilisés pour la préparation de phases stationnaires monolithiques à base de (méth)acrylates, à savoir l'azobisisobutyronitrile (AIBN), la benzophénone, la 2,2-diéthoxyacétophénone (DEA), les *α*-dialkoxyacétophénones, la 2,2-diméthyl-2-hydroxyacétophénone (DARO), les *α*-hydroxyacétophénones, le benzoïne méthyl éther (BME), la 2-méthyl-4'-(méthylthio)-2-morpholino-propiophénone (IRG), les *α*-alkylaminoacétophénones ou encore la 2,2-diméthoxy-2-phénylacétophénone (DMPA).

Dans une variante avantageuse du procédé de préparation selon l'invention, l'amorceur de polymérisation radicalaire de la composition polymérisable de synthèse du monolithe est la 2,2-diméthoxy-2-phénylacétophénone (DMPA).

Le fait de mettre en œuvre la DMPA comme même amorceur de polymérisation radicalaire dans les compositions polymérisables d'ancrage et de synthèse du monolithe permet de simplifier le procédé de préparation d'une phase stationnaire monolithique selon l'invention, en limitant notamment le nombre de composés mis en œuvre ainsi que le nombre d'étape(s) de lavage.

L'optimisation du procédé de préparation selon l'invention est assurée par la mise en œuvre du même monomère (méth)acrylate, avantageusement l'EGDMA, et de la seule DMPA comme amorceur de polymérisation radicalaire dans les compositions polymérisables d'ancrage et de synthèse du monolithe.

Dans une variante du procédé de préparation selon l'invention, la proportion massique du ou des agents porogènes, par rapport à la masse totale de la composition polymérisable de synthèse du monolithe, est comprise entre 40 % en masse et 80 % en masse et, avantageusement, entre 50 % en masse et 70 % en masse.

Dans une variante du procédé de préparation selon l'invention, la proportion massique d'amorceur de polymérisation radicalaire, par rapport à la masse totale de la composition polymérisable de synthèse du monolithe, est comprise entre 0,5 % en masse et 12 % en masse et, avantageusement, entre 1 % en masse et 5 % en masse.

Le terme de "colonne" peut bien entendu couvrir tout type de colonne de chromatographie, que cette colonne soit formée par un tube ouvert ou bien, au contraire, par un tube fermé. Toutefois, dans le contexte de la présente invention, ce terme couvre plus particulièrement les tubes fermés tels que les canaux, les microcanaux et autres capillaires qui sont destinés à équiper les systèmes miniaturisés ou microsystèmes discutés ci-avant.

Ainsi, le procédé de préparation selon l'invention vise plus particulièrement les colonnes dont le diamètre interne est inférieur ou égal à 5 mm, avantageusement inférieur ou égal à 1 mm, de préférence compris entre 50 µm et 500 µm et, plus préférentiellement, entre 50 µm et 360 µm.

Dans une variante, le procédé de préparation selon l'invention peut, en outre, comprendre une étape (iv) de lavage de la phase stationnaire monolithique telle qu'obtenue à l'issue de l'étape (iii). Cette étape (iv) de lavage permet d'éliminer les composés de la composition polymérisable de synthèse du monolithe n'ayant pas réagi ainsi que le ou les agents porogènes.

Ce lavage peut notamment être réalisé au méthanol ou à l'éthanol.

La présente invention se rapporte, en troisième lieu, à un procédé de fabrication d'une colonne de chromatographie, en particulier d'une colonne de chromatographie de séparation ou d'extraction.

Selon l'invention, ce procédé de fabrication comprend les étapes suivantes :
(1) la préparation d'une phase stationnaire monolithique dans le volume intérieur de la colonne par la mise en œuvre du procédé de préparation tel que défini ci-dessus, et
(2) la fonctionnalisation par au moins un extractant de la phase stationnaire monolithique préparée à l'étape (1).

Dans ce procédé de fabrication selon l'invention, l'étape (1) est réalisée par le procédé de préparation tel que défini ci-avant, étant précisé que les caractéristiques avantageuses de ce procédé de préparation, telles que celles relatives aux monomère(s), agent(s) porogène(s) et DMPA, à leurs proportions massiques respectives et/ou aux étapes (i) à (iii) et, le cas échéant, (iv), peuvent être prises seules ou en combinaison.

L'étape (2) de fonctionnalisation par au moins un extractant de la phase stationnaire monolithique préparée à l'étape précédente peut être réalisée par différentes voies.

Une première voie consiste à mettre en contact la phase stationnaire monolithique préparée à l'étape (1) avec au moins un extractant, ce ou ces extractants étant sous forme liquide, moyennant quoi on obtient l'imprégnation, par le ou les extractants, de la phase stationnaire monolithique.

On réalise ainsi l'imprégnation, par voie humide et *in situ,* dans le volume intérieur de la colonne, du ou des extractants dans la structure tridimensionnelle poreuse de cette phase stationnaire.

Pour ce faire, l'extractant ou le mélange d'extractants ne doit pas dégrader la phase stationnaire monolithique et doit, en outre, se présenter sous forme liquide.

Une deuxième voie consiste à réaliser un greffage covalent du ou des extractants sur la phase stationnaire monolithique préparée à l'étape (1).

Un tel greffage peut être obtenu par un procédé en une seule étape, qui consiste à faire réagir une ou plusieurs fonctions réactives F₁ appartenant à la phase stationnaire monolithique avec une ou plusieurs fonctions réactives F₂ du ou des extractants, de manière à obtenir la fixation covalente de ce ou ces extractants sur la phase stationnaire monolithique par réaction des fonctions réactives F₁ et F₂ entre elles.

Ce greffage peut aussi être obtenu par un procédé en deux étapes, ce procédé consistant :
- à faire réagir tout d'abord une ou plusieurs fonctions réactives F₁ appartenant à la phase stationnaire monolithique avec une ou plusieurs fonctions réactives F₂ d'un composé organique qui comprend deux types différents de fonctions réactives, respectivement F₂ et F₃, de manière à obtenir la fixation covalente de ce composé organique sur la phase stationnaire monolithique par réaction desdites fonctions réactives F₁ et F₂ entre elles et la fonctionnalisation de la phase stationnaire monolithique avec la ou les fonctions réactives F₃ ; puis
- à faire réagir ensuite cette ou ces fonctions réactives F₃ avec une ou plusieurs fonctions réactives F₄ du ou des extractants, de manière à obtenir la fixation covalente de ce ou ces extractants sur le composé organique par réaction desdites fonctions réactives F₃ et F₄ entre elles.

Le ou les extractants susceptibles d'être utilisés dans le cadre du procédé de fabrication selon l'invention sont les extractants classiquement utilisés en extraction liquide-liquide.

Parmi les extractants susceptibles d'être utilisés, on peut notamment citer le phosphate de tri-*n*-butyle (TBP), l'oxyde d'octylphényl-*N,N-*diisobutylcarbamoylméthylphosphine (CMPO), le diamylamyl phosphonate (DAAP), le p-amino-N,N-dihexyl acétamide (ADHA), l'acide alpha-hydroxyisobutyrique (a-HIBA), le di-bis-(2-éthylhexyl)malonamide (DB2EHM), le di-2-éthyhexyl acétylamide (DEHAA), le di-2-éthylhexyl butyramide (DEHBA), le di-2-éthyhexyl isobutyramide (DEHiBA), le diglycolamide (DGA), l'acide di-isodécylphosphorique (DIDPA), le N,N'-diméthyl-N,N'-dibutyl tétradécyl malonamide (DMDBTDMA), le N,N'-diméthyl-N,N'-dioctyl-2-(2-hexyloxy-éthyl)-malonamide (DMDOHEMA), le 4-éthoxy-N,N-dihexyl-butanamide (EDHBA), l'acide bis-2-éthylhexyl phosphorique (HDEHP), l'acide N-(2-hydroxyéthyl)-éthylènediamine triacétique (HEDTA), le N,N,N',N'-tétra-2-éthylhexyl diglycolamide (T2EHDGA), le tripodal diglycolamide (T-DGA), le N,N,N',N'-tétraoctyl diglycolamide (TODGA), les phosphates de trialkyle (TRPO), les éther-couronnes et les calixarènes. Les calixarènes peuvent être fonctionnalisés par un diglycolamide ; à titre d'exemple, on peut notamment citer le calix[4]arène fonctionnalisé par un diglycolamide (C4DGA).

Les extractants TBP et DAAP sont plus particulièrement utilisés pour extraire les actinides, notamment l'uranium(VI) ou encore le thorium(IV).

Le procédé selon l'invention permet donc de fabriquer, très facilement et à façon, une colonne de chromatographie utilisable pour extraire, séparer et/ou purifier les éléments présents dans une solution.

Les colonnes de chromatographie susceptibles d'être obtenues par le procédé selon l'invention peuvent, par conséquent, être de natures très variées et utilisables pour de nombreuses applications, telles que l'analyse et/ou la séparation d'éléments et ce, dans de nombreux domaines comme, par exemple, l'hydrométallurgie ou encore l'analyse environnementale.

La présente invention se rapporte, en quatrième lieu, à un procédé de séparation chromatographique d'éléments d'une solution aqueuse acide S, notamment d'une solution aqueuse acide S comprenant de l'acide nitrique ou de l'acide chlorhydrique.

Selon l'invention, ce procédé de séparation chromatographique comprend les étapes suivantes :
(A) au moins une circulation d'une phase mobile constituée par la solution aqueuse acide S sur une phase stationnaire monolithique d'une colonne de chromatographie fabriquée par la mise en œuvre du procédé de fabrication tel que défini ci-dessus, et
(B) au moins une élution, par une phase mobile constituée par une solution aqueuse éluante, de la phase stationnaire monolithique obtenue à l'issue de l'étape (A), moyennant quoi tout ou partie des éléments est récupéré dans la solution aqueuse éluante.

Dans ce qui précède et ce qui suit, par l'expression "élément", on entend tout élément chimique répertorié dans le tableau périodique des éléments de Mendeleïev.

Dans ce procédé de séparation chromatographique selon l'invention, l'étape (A) met en œuvre une phase stationnaire monolithique fonctionnalisée qui a été obtenue par le procédé de fabrication tel que défini ci-avant, étant précisé que les caractéristiques avantageuses de ce procédé de fabrication, notamment celles relatives aux modalités de mise en œuvre des étapes (1) et (2), peuvent être prises seules ou en combinaison.

Au cours de cette étape (A), se produit la rétention du ou des éléments qui, parmi ceux contenus dans la solution aqueuse acide S, présentent une affinité avec le ou les extractants imprégnés ou greffés sur la phase stationnaire monolithique.

Le ou les éléments qui ont été retenus lors de l'étape (A) sont ensuite désextraits de la phase stationnaire monolithique par la mise en œuvre de l'étape (B) qui comprend au moins une élution par une phase mobile constituée par une solution aqueuse éluante. Une telle solution aqueuse éluante peut notamment être une solution aqueuse basique.

Dans une variante de l'invention, la solution aqueuse acide S présente une concentration d'ions H⁺ inférieure ou égale à 10 mol/L.

Cette concentration d'ions H⁺ de la solution aqueuse acide est avantageusement comprise entre 0,1 mol/L et 8 mol/L et, de préférence, comprise entre 1 mol/L et 6 mol/L.

Le procédé de séparation selon l'invention est de mise en œuvre particulièrement simple et permet de séparer, d'extraire et/ou de récupérer, de manière sélective, des éléments en fonction de leur affinité avec le ou les extractants imprégnés sur la phase stationnaire monolithique de la colonne de chromatographie.

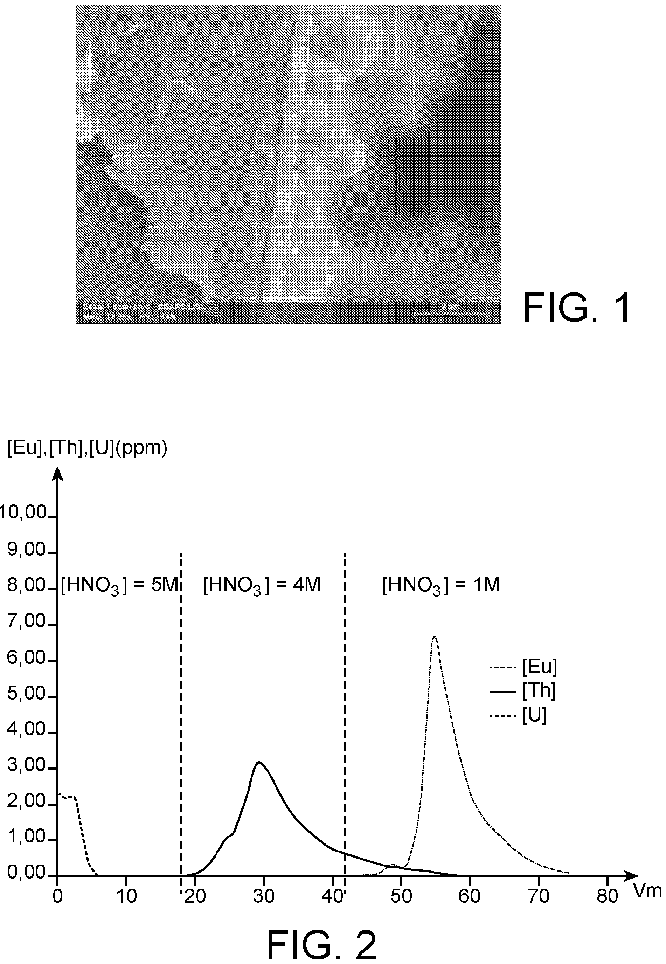

D'autres caractéristiques et avantages de l'invention apparaîtront à la lecture du complément de description qui suit, qui est fait en référence aux figures 1 et 2 annexées, et qui se rapporte à des exemples de modification d'une surface d'un support en COC conformes au procédé selon l'invention, à des exemples de préparation de phases stationnaires monolithiques, l'une conforme à l'invention et l'autre conforme à la publication **[1]** ainsi qu'à des exemples de séparation permettant d'illustrer les performances la phase stationnaire monolithique préparée et imprégnée par du TBP dans un procédé de séparation de deux actinides (thorium et uranium) et d'un lanthanide (europium) initialement contenus dans une solution aqueuse comprenant de l'acide nitrique.

Bien entendu, ces exemples ne sont donnés qu'à titre d'illustration de l'objet de l'invention et ne constituent, en aucun cas, une limitation de cet objet.

### BRÈVE DESCRIPTION DES DESSINS

La figure 1 correspond à un cliché pris au moyen d'un microscope électronique à balayage (MEB) de la phase stationnaire monolithique préparée conformément au protocole décrit ci-dessous.
La figure 2 illustre les courbes traduisant l'évolution des concentrations d'europium, de thorium et d'uranium se retrouvant dans les éluats collectés, respectivement notées [Eu], [Th] et [U] et exprimées en ppm, en fonction du nombre de volumes morts, notés Vm, de phases éluantes ayant circulé, après dépôt de l'échantillon de solution aqueuse S dans la colonne chromatographique conforme à l'invention, notée Col_{inv.}.

### EXPOSÉ DÉTAILLÉ DE MODES DE RÉALISATION PARTICULIERS

### 1. Modification d'une surface d'une plaque en COC

Une composition polymérisable d'ancrage a été préparée par mélange de 160 mg de diméthacrylate d'éthylène glycol (EGDMA), 80 mg de 2,2-diméthoxy-2-phénylacétophénone (DMPA) et 850 mg d'éthanol.

La composition polymérisable d'ancrage ainsi préparée a ensuite été déposée sur un support formé par une plaque en copolymère d'oléfine cyclique, ce COC étant commercialisé sous la référence Topas®6013 par la société Topas Advanced Polymers GmbH. Cette plaque, qui présente une largeur de 21 cm, une longueur de 29,7 cm et une épaisseur de 381 µm, a été préalablement rincée à l'éthanol.

La plaque ainsi revêtue a ensuite été placée dans un four sous un rayonnement ultraviolet (UV) d'une longueur d'onde de 365 nm pendant 20 min afin d'obtenir la polymérisation de la composition.

La figure 1 illustre le cliché tel qu'obtenu au moyen d'un microscope électronique à balayage (MEB) de cette phase stationnaire monolithique ainsi préparée puis déposée, ce cliché ayant été traité par le logiciel ImageJ. On observe bien une modification de la surface du support constitué par la plaque en COC, avec la présence, sur cette surface, de nodules formant une phase stationnaire monolithique.

### 2. Préparation de phases stationnaires monolithiques dans le volume intérieur d'une colonne en COC

### 2.1. Phase stationnaire monolithique préparée conformément au procédé selon l'invention

La composition polymérisable d'ancrage préparée conformément au paragraphe 1. ci-dessus a été introduite, à un débit de 1,2 mL/h et pendant 10 min, dans un microcanal en COC, ce microcanal présentant un diamètre externe de 4 mm, une longueur de 25 mm et une profondeur de 360 µm.

Au terme des 10 min, la composition polymérisable d'ancrage excédentaire est vidée pour ne laisser qu'un film de composition polymérisable d'ancrage sur la paroi interne du microcanal.

On a ensuite procédé à la polymérisation de ce film de composition polymérisable d'ancrage par voie photochimique, sous un rayonnement UV d'une longueur d'onde de 365 nm pendant 1 h. Le microcanal ainsi obtenu comprend une paroi interne modifiée.

On a ensuite préparé une composition polymérisable de synthèse du monolithe comprenant :
- 20 % en masse de méthacrylate d'allyle (AMA),
- 20 % en masse de diméthacrylate d'éthylène glycol (EGDMA),
- 33 % en masse de 1-propanol,
- 24 % en masse de 1,4-butanediol,
- 2 % en masse d'eau, et
- 1 % en masse de 2,2-diméthoxy-2-phénylacétophénone (DMPA).

Cette composition polymérisable de synthèse du monolithe a ensuite été introduite à l'intérieur du microcanal comprenant la paroi interne modifiée.

Après polymérisation de cette composition polymérisable de synthèse du monolithe sous une rayonnement UV de 365 nm de longueur d'onde pendant 10 min, on obtient une colonne chromatographique, notée Col_{inv.}.

### 2.2. Phase stationnaire monolithique préparée conformément au procédé décrit dans la publication [1]

Une composition polymérisable du type de celle décrite pour la préparation du second monolithe décrit à la page 1682, colonne de gauche de la publication [1] a été préparée à partir d'un mélange comprenant les composés suivants, dans les pourcentages volumiques précisés ci-dessous :
- 30 % de méthacrylate de glycidyle (GMA),
- 10 % de diméthacrylate d'éthylène glycol (EGDMA),
- 35 % de 1-propanol,
- 20 % de 1,4-butanediol, et
- 5 % d'eau.

Au mélange ainsi préparé, on a ajouté de l'azobisisobutyronitrile (AIBN) comme amorceur de polymérisation radicalaire en une proportion massique de 2,5 % par rapport à la masse totale de monomères méthacrylates GMA et EGDMA.

La composition polymérisable ainsi obtenue a ensuite été introduite à l'intérieur d'un même microcanal en COC que celui décrit au paragraphe 2.1. ci-dessus.

Après polymérisation de cette composition polymérisable selon un protocole similaire à celui décrit ci-dessus pour la plaque en COC revêtue (rayonnement UV de 365 nm de longueur d'onde pendant 30 min), on obtient une colonne chromatographique, notée Col_{ref.}.

### 3. Séparations chromatographiques

Les colonnes chromatographiques Colᵢₙᵥ. et Col_{ref}. ont été imprégnées par du phosphate de tri-*n*-butyle (TBP).

L'imprégnation des phases stationnaires monolithiques a été réalisée par une circulation de TBP pur dans chacune des colonnes Colᵢₙᵥ. et Col_{ref} pendant 2 h à un débit de 0,3 mL/h (5 µL/min). Les phases stationnaires monolithiques imprégnées de TBP ont ensuite été rincées par une circulation, à un débit 1 mL/h (17 µL/min), d'eau distillée pendant 7 min.

On a déposé, sur chacune des colonnes Colᵢₙᵥ. et Col_{ref.}, un échantillon formé par 72,8 µl d'une solution aqueuse S contenant de l'acide nitrique à 5 mol/L (5 M), de l'europium, du thorium et de l'uranium, dans les teneurs suivantes :
- [Eu] = 2,5 ppm,
- [Th] =8,9 ppm, et
- [U] = 10 ppm.

Après le dépôt de l'échantillon, on procède à un lavage de la phase stationnaire de chacune des colonnes au moyen d'une phase mobile formée par une solution d'acide nitrique à 5 mol/L à un débit compris entre 0,15 et 0,2 mL/h.

### 3.1 Séparation chromatographique au moyen de la colonne Col_{ref}.

L'éluat, qui est collecté à la sortie de la colonne Col_{ref.} après l'étape de lavage mentionnée ci-dessus, contient non seulement l'europium Eu, qui est un élément qui n'a pas d'affinité avec la phase stationnaire imprégnée de TBP, mais également du thorium et de l'uranium qui sont deux éléments qui auraient dû être retenus par la phase stationnaire monolithique imprégnée de TBP.

La présence de ces deux éléments dans l'éluat traduit la faiblesse de l'ancrage de la phase stationnaire monolithique à la paroi du microcanal, faiblesse d'ancrage qui permet une fuite de la solution aqueuse S, et donc de l'ensemble des éléments qu'elle contient, le long de la paroi interne du microcanal.

La séparation des trois éléments Eu, Th et U est de moins bonne qualité ou même devient impossible.

### 3.2 Séparation chromatographique au moyen de la colonne Col_{inv.}

L'éluat, qui est collecté à la sortie de la colonne Col_{inv.} après l'étape de lavage mentionnée ci-dessus, contient, comme seul élément élué, l'europium Eu qui n'a pas d'affinité avec la phase stationnaire imprégnée de TBP.

L'élution de l'élément thorium Th est alors réalisée par un changement de phase éluante au profit d'une solution aqueuse d'acide nitrique à 4 mol/L.

Enfin, l'élution de l'élément uranium est ensuite réalisée par un nouveau changement de phase éluante au profit d'une solution aqueuse d'acide nitrique à 1 mol/L.

Les élutions et séparations successives sont illustrées sur la figure 2 annexée dont les courbes traduisent l'évolution des concentrations d'europium [Eu], de thorium [Th] et d'uranium [U] se retrouvant dans les éluats successivement collectés, en fonction du nombre de volumes morts, notés Vm, des différentes phases de lavage et éluantes ayant successivement circulé, étant précisé que 1 Vm = 11,14 µL.

Comme le montre la figure 2, la séparation des trois éléments Eu, Th et U est non seulement possible mais est également particulièrement performante.

### BIBLIOGRAPHIE

**[1]** Y. Ladner et al., Lab Chip, 2012, 12, pages 1680-1685
**[2]** FR 2 978 153 A1
**[3]** J.M. Burke et al., Biomicrofluidics, 2012, 6, 016506

## Revendications

1. Procédé de fabrication d'une colonne de chromatographie, en particulier d'une colonne de chromatographie de séparation ou d'extraction, ce procédé comprenant les étapes (1) et (2) suivantes :
(1) la préparation d'une phase stationnaire monolithique dans le volume intérieur de la colonne de chromatographie, cette colonne de chromatographie étant en polymère thermoplastique, par la mise en œuvre des étapes (i) à (iii) successives suivantes :
(i) la modification de la paroi interne de la colonne de chromatographie par la mise en œuvre des étapes (a) à (c) successives suivantes :
(a) la préparation d'une composition polymérisable d'ancrage comprenant :
• au moins un monomère (méth)acrylate choisi parmi le diméthacrylate d'éthylène glycol, le diacrylate de 1,4-butanediol, le diméthacrylate de triéthylène glycol et le triméthacrylate de triméthylolpropane,
• un ou plusieurs solvants, et
• la 2,2-diméthoxy-2-phénylacétophénone,
(b) le dépôt, sur la paroi interne de la colonne de chromatographie, de la composition polymérisable d'ancrage préparée à l'étape (a), et
(c) la polymérisation de la composition polymérisable d'ancrage par irradiation au moyen de rayons ultraviolets ;
(ii) l'introduction d'une composition polymérisable de synthèse du monolithe dans le volume intérieur de la colonne de chromatographie, la composition polymérisable de synthèse du monolithe comprenant :
- un premier monomère (méth)acrylate choisi parmi le diméthacrylate d'éthylène glycol, le diacrylate de 1,4-butanediol, le diméthacrylate de triéthylène glycol et le triméthacrylate de triméthylolpropane,
- un deuxième monomère méth(acrylate) choisi parmi le méthacrylate d'allyle, le méthacrylate de glycidyle, le méthacrylate de lauryle, le méthacrylate de butyle, le méthacrylate de 2-hydroxyéthyle, le di(méth)acrylate de polyéthylène glycol, le méthacrylate de glycidyle et de bisphénol A et l'acrylate d'hexyle,
- un ou plusieurs agents porogènes, et
- un amorceur de polymérisation radicalaire ; et
(iii) la polymérisation de la composition polymérisable de synthèse du monolithe ; et
(2) la fonctionnalisation par au moins un extractant de la phase stationnaire monolithique préparée à l'étape (1).

2. Procédé de fabrication selon la revendication 1, dans lequel le polymère thermoplastique de la colonne de chromatographie est choisi parmi un polyméthacrylate de méthyle, un polyéthylène, un polypropylène et un copolymère d'oléfine cyclique et est, avantageusement, un copolymère d'oléfine cyclique.

3. Procédé de fabrication selon la revendication 1 ou 2, dans lequel, dans l'étape (a), le monomère (méth)acrylate est le diméthacrylate d'éthylène glycol.

4. Procédé de fabrication selon l'une quelconque des revendications 1 à 3, dans lequel, dans l'étape (a), le ou les solvants sont choisis parmi le méthanol, l'éthanol, le 1-propanol, le 1,4-butanediol, le cyclohexanol, le 1-décanol, l'acétonitrile, le toluène et l'iso-octane, le solvant étant, de préférence, l'éthanol.

5. Procédé de fabrication selon l'une quelconque des revendications 1 à 4, dans lequel, dans l'étape (a), la proportion massique du ou des solvants, par rapport à la masse totale de la composition polymérisable d'ancrage, est comprise entre 50 % en masse et 90 % en masse et, avantageusement, entre 60 % en masse et 80 % en masse.

6. Procédé de fabrication selon l'une quelconque des revendications 1 à 5, dans lequel, dans l'étape (a), la proportion massique de la 2,2-diméthoxy-2-phénylacétophénone, par rapport à la masse totale de la composition polymérisable d'ancrage, est comprise entre 5 % en masse et 15 % en masse et, avantageusement, entre 6 % en masse et 10 % en masse.

7. Procédé de fabrication selon l'une quelconque des revendications 1 à 6, dans lequel la longueur d'onde des rayons ultraviolets appliqués lors de l'étape (c) est comprise entre 320 nm et 400 nm, avantageusement entre 350 nm et 380 nm et, préférentiellement, entre 355 nm et 370 nm.

8. Procédé de fabrication selon l'une quelconque des revendications 1 à 7, dans lequel, dans l'étape (a), le temps d'irradiation au moyen des rayons ultraviolets est compris entre 5 min et 80 min et, avantageusement, entre 15 min et 70 min.

9. Procédé de fabrication selon l'une quelconque des revendications 1 à 8, dans lequel l'étape (b) est réalisée par au moins une circulation de la composition polymérisable d'ancrage préparée à l'étape (a) dans le volume intérieur de la colonne de chromatographie.

10. Procédé de fabrication selon l'une quelconque des revendications 1 à 9, dans lequel la composition polymérisable d'ancrage mise en œuvre dans l'étape (i) et la composition polymérisable de synthèse du monolithe mise en œuvre lors de l'étape (ii) comprennent un même monomère (méth)acrylate, avantageusement le diméthacrylate d'éthylène glycol.

11. Procédé de fabrication selon l'une quelconque des revendications 1 à 10, dans lequel le diamètre interne de la colonne de chromatographie est inférieur ou égal à 5 mm, avantageusement inférieur ou égal à 1 mm, de préférence compris entre 50 µm et 500 µm et, plus préférentiellement, entre 50 µm et 250 µm.

12. Procédé de fabrication selon l'une quelconque des revendications 1 à 11, dans lequel l'étape (2) de fonctionnalisation est réalisée par la mise en contact de la phase stationnaire monolithique préparée à l'étape (1) avec au moins un extractant sous forme liquide, moyennant quoi on obtient l'imprégnation, par le ou les extractants, de la phase stationnaire monolithique.

13. Procédé de fabrication selon l'une quelconque des revendications 1 à 11, dans lequel l'étape (2) de fonctionnalisation est réalisée par un greffage covalent du ou des extractants sur la phase stationnaire monolithique préparée à l'étape (1).

14. Procédé de séparation chromatographique d'éléments d'une solution aqueuse acide S, notamment d'une solution aqueuse acide S comprenant de l'acide nitrique ou de l'acide chlorhydrique, ce procédé comprenant :
(A) au moins une circulation d'une phase mobile constituée par la solution aqueuse acide S sur une phase stationnaire monolithique d'une colonne de chromatographie fabriquée par la mise en œuvre du procédé selon l'une quelconque des revendications 1 à 13, et
(B) au moins une élution, par une phase mobile constituée par une solution aqueuse éluante, de la phase stationnaire monolithique obtenue à l'issue de l'étape (A), moyennant quoi tout ou partie des éléments est récupéré dans la solution aqueuse éluante.

15. Procédé de séparation chromatographique selon la revendication 14, dans lequel la solution aqueuse S présente une concentration d'ions H⁺ inférieure ou égale à 10 mol/L, avantageusement comprise entre 0,1 mol/L et 8 mol/L et, de préférence, comprise entre 1 mol/L et 6 mol/L.

## Patentansprüche

1. Verfahren zur Herstellung einer Chromatographiesäule, insbesondere einer Chromatrographiesäule zur Separation oder zur Extraktion, wobei dieses Verfahren die folgenden Schritte (1) und (2) umfasst:
(1) die Herstellung einer monolithischen stationären Phase in dem Innenvolumen der Chromatographiesäule, wobei diese Chromatographiesäule aus thermoplastischem Polymer ist, mittels der Durchführung der folgenden aufeinanderfolgenden Schritte (i) bis (iii):
(i) die Modifikation der Innenwand der Chromatographiesäule mittels der Durchführung der folgenden aufeinanderfolgenden Schritte (a) bis (c)
(a) die Herstellung einer polymerisierbaren Ankerzusammensetzung, umfassend:
· wenigstens ein (Meth)Acrylatmonomer, ausgewählt aus Dimethacrylat von Ethylenglycol, Diacrylat von 1,4-Butandiol, Dimethacrylat von Triethylenglycol und Trimethacrylat von Trimethylolpropan,
·ein oder mehrere Lösungsmittel, und
· 2,2-Dimethoxy-2-Phenylacetophenon,
(b) das Aufbringen, auf die Innenwand der Chromatographiesäule, der im Schritt (a) hergestellten polymerisierbaren Ankerzusammensetzung, und
(c) die Polymerisation der polymerisierbaren Ankerzusammensetzung mittels Bestrahlung mit Hilfe von Ultraviolettstrahlen;
(ii) die Einbringung einer polymerisierbaren Monolithsynthesezusammensetzung in das Innenvolumen der Chromatographiesäule, wobei die polymerisierbare Monolithsynthesezusammensetzung umfasst:
- ein erstes (Meth)Acrylatmonomer, ausgewählt aus Dimethacrylat von Ethylenglycol, Diacrylat von 1,4-Butandiol, Dimethacrylat von Triethylenglycol und Trimethacrylat von Trimethylolpropan,
- ein zweites Meth(Acrylat)monomer, ausgewählt aus Methacrylat von Allyl, Methacrylat von Glycidyl, Methacrylat von Lauryl, Methacrylat von Butyl, Methacrylat von 2-Hydroxyethyl, Di(meth)acrylat von Polyethylenglycol, Methacrylat von Glycidyl und von Bisphenol A und Acrylat von Hexyl,
- ein oder mehrere porogene Agenzien, und
- einen radikalischen Polymerisationsinitiator; und
(iii) die Polymerisation der polymerisierbaren Monolithsynthesezusammensetzung; und
(2) die Funktionalisierung mittels wenigstens eines Extraktionsmittels der im Schritt (1) hergestellten monolithischen stationären Phase.

2. Herstellungsverfahren nach Anspruch 1, bei dem das thermoplastische Polymer der Chromatographiesäule ausgewählt ist aus einem Polymethacrylat von Methyl, einem Polyethylen, einem Polypropylen und einem zyklischen Copolymer von Olefin, und vorzugsweise ein zyklisches Copolymer von Olefin ist.

3. Herstellungsverfahren nach Anspruch 1 oder 2, bei dem im Schritt (a) das (Meth)Arylatmonomer Dimethacrylat von Ethylenglykol ist.

4. Herstellungsverfahren nach einem der Ansprüche 1 bis 3, bei dem im Schritt (a) das oder die Lösungsmittel ausgewählt sind aus Methanol, Ethanol, 1-Propanol, 1,4-Butandiol, Cyclohexanol, 1-Decanol, Acetonitril, Toluol und Isooctan, wobei das Lösungsmittel vorzugsweise Ethanol ist.

5. Herstellungsverfahren nach einem der Ansprüche 1 bis 4, bei dem im Schritt (a) das Massenverhältnis des oder der Lösungsmittel bezogen auf die gesamte Masse der polymerisierbaren Ankerzusammensetzung zwischen 50 Massen-% und 90 Massen-% enthalten ist, und vorzugsweise zwischen 60 Massen-% und 80 Massen-%.

6. Herstellungsverfahren nach einem der Ansprüche 1 bis 5, bei dem im Schritt (a) das Massenverhältnis des 2,2-Dimethoxy-2-Phenylacetophenon bezogen auf die gesamte Masse der polymerisierbaren Ankerzusammensetzung zwischen 5 Massen-% und 15 Massen-% enthalten ist, und vorzugsweise zwischen 6 Massen-% und 10 Massen-%.

7. Herstellungsverfahren nach einem der Ansprüche 1 bis 6, bei dem die Wellenlänge der während des Schritts (c) angewandten Ultraviolettstrahlen zwischen 320 nm und 400 nm enthalten ist, vorzugsweise zwischen 350 nm und 380 nm, und bevorzugt zwischen 355 nm und 370 nm.

8. Herstellungsverfahren nach einem der Ansprüche 1 bis 7, bei dem im Schritt (a) die Zeit der Bestrahlung mit Hilfe der Ultraviolettstrahlen zwischen 5 min und 80 min enthalten ist, und vorzugsweise zwischen 15 min und 70 min.

9. Herstellungsverfahren nach einem der Ansprüche 1 bis 8, bei dem der Schritt (b) mittels wenigstens einer Zirkulation der im Schritt (a) hergestellten polymerisierbaren Ankerzusammensetzung im Innenvolumen der Chromatographiesäule realisiert wird.

10. Herstellungsverfahren nach einem der Ansprüche 1 bis 9, bei dem die im Schritt (i) verwendete polymerisierbare Ankerzusammensetzung und die während des Schritts (ii) verwendete polymerisierbare Monolithsynthesezusammensetzung ein und dasselbe (Meth)Acrylatmonomer enthalten, vorzugsweise Dimethacrylat von Ethylenglykol.

11. Herstellungsverfahren nach einem der Ansprüche 1 bis 10, bei dem der Innendurchmesser der Chromatographiesäule kleiner oder gleich 5 mm ist, vorzugsweise kleiner oder gleich 1 mm, bevorzugt enthalten zwischen 50 µm und 500 µm, und weiter bevorzugt zwischen 50 µm und 250 µm.

12. Herstellungsverfahren nach einem der Ansprüche 1 bis 11, bei dem der Schritt (2) der Funktionalisierung realisiert wird mittels Inkontaktbringens der im Schritt (1) hergestellten monolithischen stationären Phase mit wenigstens einem Extraktionsmittel in flüssiger Form, wodurch man die Imprägnierung der monolithischen stationären Phase mittels des oder der Extraktionsmittel erzielt.

13. Herstellungsverfahren nach einem der Ansprüche 1 bis 11, bei dem der Schritt (2) der Funktionalisierung durch ein kovalentes Pfropfen des oder der Extraktionsmittel auf die im Schritt (1) hergestellte monolithische stationäre Phase realisiert wird.

14. Verfahren zur chromatographischen Separation von Elementen einer sauren wässrigen Lösung S, insbesondere einer sauren wässrigen Lösung S, die Salpetersäure oder Salzsäure enthält, wobei dieses Verfahren umfasst:
(A) wenigstens eine Zirkulation einer mobilen Phase, gebildet durch die saure wässrige Lösung S, auf einer monolithischen stationären Phase einer Chromatographiesäule, hergestellt durch die Durchführung des Verfahrens nach einem der Ansprüche 1 bis 13, und
(B) wenigstens eine Elution, durch eine mobile Phase, die durch eine eluierende wässrige Lösung gebildet ist, der am Ende des Schritts (A) erhaltenen monolithischen stationären Phase, wodurch die Gesamtheit oder ein Teil der Elemente in der eluierenden wässrigen Lösung gesammelt wird.

15. Verfahren zur chromatographischen Separation nach Anspruch 14, bei dem die wässrige Lösung S eine H⁺-lonenkonzentration kleiner oder gleich 10 mol/L aufweist, vorzugsweise enthalten zwischen 0,1 mol/L und 8 mol/L, und bevorzugt enthalten zwischen 1 mol/L und 6 mol/L.

## Claims

1. Method for producing a chromatography column, in particular a separation or extraction chromatography column, this method comprising the following steps (1) and (2) :
(I) preparing a monolithic stationary phase within the interior volume of the chromatography column, this chromatography column being in thermoplastic polymer, by implementing the following successive steps (i) to (iii) :
(i) modifying the inner wall of the chromatography column by implementing the following successive steps (a) to (c) :
(a) preparing a polymerizable anchoring composition comprising :
• at least one (meth)acrylate monomer selected from among ethylene glycol dimethacrylate, 1,4-butanediol diacrylate, triethylene glycol dimethacrylate and trimethylolpropane trimethacrylate,
• one or more solvents, and
• 2,2-dimethoxy-2-phenylacetophenone,
(b) depositing, on the inner wall of the chromatography column, the polymerizable anchoring composition prepared at step (a), and
(c) polymerizing the polymerizable anchoring composition via ultraviolet radiation ;
(ii) introducing a polymerizable monolith synthesis composition in the interior volume of the chromatography column, the polymerizable monolith synthesis composition comprising :
- a first (meth)acrylate monomer selected from among ethylene glycol dimethacrylate, 1,4-butanediol diacrylate, triethylene glycol dimethacrylate and trimethylolpropane trimethacrylate,
- a second meth(acrylate) monomer selected from among allyl methacrylate, glycidyl methacrylate, lauryl methacrylate, butyl methacrylate, 2-hydroxyethyl methacrylate, polyethylene glycol di(meth)acrylate, bisphenol A-glycidyl methacrylate and hexyl acrylate,
- one or more pore-forming agents, and
- a radical polymerization initiator; and
(iii) polymerizing the polymerizable monolith synthesis composition ; and
(2) functionalizing the monolithic stationary phase prepared at step (1) by at least one extractant.

2. The production method according to claim 1, wherein the thermoplastic polymer of the chromatography column is selected from among a poly(methyl methacrylate), a polyethylene, a polypropylene and a cyclic olefin copolymer, and is advantageously a cyclic olefin copolymer.

3. The production method according to claim 1 or 2, wherein, at step (a), the (meth)acrylate monomer is ethylene glycol dimethacrylate.

4. The production method according to any of claims 1 to 3, wherein, at step (a), the solvent(s) are selected from among methanol, ethanol, 1-propanol, 1,4-butanediol, cyclohexanol, 1-decanol, acetonitrile, toluene and iso-octane, the solvent preferably being ethanol.

5. The production method according to any of claims 1 to 4, wherein, at step (a), the mass proportion of the solvent(s) relative to the total mass of the polymerizable anchoring composition is between 50 mass % and 90 mass %, and advantageously between 60 mass % and 80 mass %.

6. The production method according to any of claims 1 to 5, wherein, at step (a), the mass proportion of 2,2-dimethoxy-2-phenylacetophenone relative to the total mass of the polymerizable anchoring composition is between 5 mass % and 15 mass %, and advantageously between 6 mass % and 10 mass %.

7. The production method according to any of claims 1 to 6, wherein the wavelength of ultraviolet radiation applied a step (c) is between 320 nm and 400 nm, advantageously between 350 nm and 380 nm, and more preferably between 355 nm and 370 nm.

8. The production method according to any of claims 1 to 7, wherein, at step (a), the ultraviolet irradiation time is between 5 min and 80 min, and advantageously between 15 min and 70 min.

9. The production method according to any of claims 1 to 8, wherein step (b) is implemented by at least one circulation of the polymerizable anchoring composition prepared at step (a) within the interior volume of the chromatography column.

10. The production method according to any of claims 1 to 9, wherein the polymerizable anchoring composition used at step (i) and the polymerizable monolith synthesis composition used at step (ii) comprise one same (meth)acrylate monomer, advantageously ethylene glycol dimethacrylate.

11. The production method according to any of claims 1 to 10, wherein the inner diameter of the chromatography column is smaller than or equal to 5 mm, advantageously smaller than or equal to 1 mm, preferably between 50 µm and 500 µm, and more preferably between 50 µm and 250 µm.

12. The production method according to any of claims 1 to 11, wherein the functionalization step (2) is implemented by contacting the monolithic stationary phase prepared at step (1) with at least one extractant in liquid form, whereby impregnation of the monolithic stationary phase with the extractant(s) is obtained.

13. The production method according to any of claims 1 to 11, wherein the functionalization step (2) is performed by covalent grafting of the extractant(s) on the monolithic stationary phase prepared at step (1).

14. Method for chromatographic separation of elements of an acid aqueous solution S, particularly of an acid aqueous solution S comprising nitric acid or hydrochloric acid, this method comprising:
(A) at least one circulation of a mobile phase consisting of the acid aqueous solution S over a monolithic stationary phase of a chromatography column produced by implementing the method according to any of claims 1 to 13, and
(B) at least one elution, with a mobile phase consisting of an eluting aqueous solution, of the monolithic stationary phase obtained after step (A), whereby some or all of the elements are recovered in the eluting aqueous solution.

15. The chromatographic separation method according to claim 14, wherein the aqueous solution S has a concentration of H⁺ ions lower than or equal to 10 mol/L, advantageously between 0,1 mol/L and 8 mol/L, and preferably between 1 mol/L and 6 mol/L.
